# EUROPÄISCHE PATENTSCHRIFT

(11) **EP 0 574 453 B1**
(45) Veröffentlichungstag und Bekanntmachung des Hinweises auf die Patenterteilung: **05.10.1994**
(21) Anmeldenummer: 92905649.7
(22) Anmeldetag: 03.03.1992
(51) Int. Cl.: A62D 3/00, C09K 3/32, B09B 3/00

(54) **VERFAHREN ZUR BODENAUFARBEITUNG**
METHOD OF RECONDITIONING SOIL
PROCEDE POUR LA PREPARATION DU SOL

(30) Priorität: 05.03.1991 DE 4106922
(43) Veröffentlichungstag der Anmeldung: 22.12.1993
(73) Patentinhaber: Bergwerksverband GmbH, D-45307 Essen (DE)
(72) Erfinder: BEYER, Michael, D-4300 Essen 17 (DE); VAN AFFERDEN, Manfred, D-4630 Bochum 1 (DE); TEBRÜGGE, Theo, D-4292 Rhede (DE); JOCKERS, Rainer, D-4690 Herne (DE)
(86) Internationale Anmeldenummer: EP9200468
(87) Internationale Veröffentlichungsnummer: WO9215372

(56) Entgegenhaltungen:
- EP-A- 0 302 293
- DE-A- 1 944 636
- DE-A- 4 004 368
- WASSER,LUFT UND BODEN Bd.33,Nr.7/8,Juli 1989,MAINZ,DE SEITEN 62-63; M. DÖPPERT:"Zweistufiges nassmechanisches Verfahren zur Bodensanierung"
- WASSER,LUFT UND BODEN Bd.34,Nr.11,November 1990,MAINZ,DE Seiten 90-91; D. FLIEGERT: "Betriebserfahrungen mit der Hochdruck-Bodenwaschanlage"

## Beschreibung

Die Erfindung betrifft ein Verfahren zur Bodenaufarbeitung gemäß dem Oberbegriff des Anspruchs 1.

Es ist aus Karl J. Thomé-Kozmiensky, "Altlasten 3", EF-Verlag für Energie- und Umwelttechnik GmbH, Berlin, 1989, Seite 561 bis 578 bekannt, kontaminierte Böden, sogenannte Altlasten, durch Bodenwäsche mit nachfolgender Klassierung, Dichtesortierung und/oder Flotation zu reinigen, da festgestellt wurde, daß die in dem Boden vorhandenen Schadstoffe sowohl in der Feinstkornfraktion als auch in dem Leichtgut angereichert vorliegen können.

In Pilotanlagen konnten polycyclische Kohlenwasserstoffe, chlorierte Kohlenwasserstoffe und aromatische Verbindungen gemäß den Komponenten 3, 4 und 5 der sogenannten "Holländischen Liste" entfernt werden. Als Leichtgut sind Holz, Schlacke, Kohle, Koks und Kunststofffraktionen offenbart.

Voraussetzung für eine vollständige Reinigung gemäß diesem Verfahren ist, daß der Boden mit Leichtgut durchsetzt ist und daß die Schadstoffe quantitativ in dem Leichtgut gebunden vorliegen. Wenn in dem Boden Leichtgut vorhanden ist, ist es in der Regel nur in den obersten Bodenschichten enthalten. An Altlastenstandorten sind jedoch auch tieferliegende Bodenschichten mit Schadstoffen belastet.

Der Boden, der nach einem Verfahren gemäß dem Stand der Technik aufgearbeitet werden soll, darf nur einen geringen Feinstkornanteil an Schluff (2 - 63 m) und Ton (> 2 m) aufweisen. Beim Feinstkornanteil von z. B. 50 % läßt sich ein derartiger Boden durch Abtrennung des Feinstkorns und der darin enthaltenen Kontamination nur zu 50 % reinigen. Ein derartiges Verfahren ist ungeeignet.

Mit dem bekannten Verfahren kann somit die überwiegende Anzahl der kontaminierten Böden nicht entsorgt werden.

Es ist weiterhin aus der nicht vorveröffentlichten DE-OS 40 04 368 bekannt, den Boden vor oder während des Waschprozesses mit feinkörnigen kohligen Substanzen, insbesondere Koks, zu vermischen und anschließend die mit den Schadstoffen angereicherten kohligen Substanzen von dem Waschgut mittels mechanischer oder physikalischer Verfahren abzutrennen.

Bei diesem Verfahren ist von Nachteil, daß die feinkörnigen kohligen Substanzen sich nur mit großem Aufwand und nicht quantitativ von dem Feinstkorn des Bodens abtrennen lassen.

Der Erfindung liegt die Aufgabe zugrunde, für alle Böden und Bodenschichten, unabhängig von der Menge und Art des Leichtgutes und des Feinstkornanteils, eine für den jeweiligen Anwendungszweck ausreichende Dekontamination zu erreichen.

Diese Aufgabe wird durch die im Kennzeichen des Anspruchs 1 niedergelegten Merkmale gelöst.

Durch Versuche hat sich herausgestellt, daß mit dem erfindungsgemäßen Verfahren praktisch alle kontaminierten Böden saniert werden können.

Verunreinigte Böden von Altlastenstandorten können große Unterschiede hinsichtlich der Art und der Konzentration der vorliegenden Kontaminationen aufweisen, so daß in einem ersten Schritt die Analyse der für die Dekontamination wichtigen Bodeneigenschaften erfolgt. Zu diesen Charakteristika gehören neben der Art, Konzentration und Verteilung der Schadstoffe im Boden auch die Korngrößenverteilung und die Ermittlung des Leichtgutanteils. Aus der Differenz des Gesamtschadstoffgehalts und des Schadstoffgehalts des Leichtgutes wird der freie Schadstoffgehalt ermittelt.

Aus diesen Analysen ergibt sich die Zugabemenge an Adsorptionsmittel. Dabei wird die Zugabemenge so berechnet, daß die Kapazität des Adsorptionsmittels ausreicht, um den Schadstoffgehalt auf das angestrebte Sanierungsziel zu reduzieren.

Die ermittelte Adsorptionsmittelmenge wird in den Boden eingebracht und innig mit dem Boden vermischt. Die Zugabe kann durch Aufstreuen und Untermischen mit konventionellen Landwirtschaftsgeräten erfolgen oder nach Ausheben des Boden in Mischmaschinen durchgeführt werden.

Nach Zugabe des Adsorptionsmittels und dessen Vermischung mit dem Boden wird das Gemenge ständig oder in mehr oder weniger häufiger Folge innig durchmischt, um eine rasche und vollständige Adsorption der Schadstoffe an dem Adsorptionsmittel zu gewährleisten. Die erforderliche Zeit kann einige Stunden bis einige Tage betragen und ist ebenso wie die erforderliche Häufigkeit des Mischvorgangs vom Grad und der Art der Kontamination und der Bodenart abhängig.

In einem weiteren Verfahrensschritt wird das Adsorptionsmittel und gegebenenfalls im Boden enthaltenes Leichtgut durch die an sich bekannten Verfahren der Bodenwäsche, wie Klassierung, Dichtesortierung und/oder Flotation, entfernt. Die gereinigte Bodenfraktion stellt dabei den größten Anteil dar, während die Schadstoffe in einem kleinen Anteil der Gesamtmenge konzentriert vorliegen.

Als Adsorptionsmittel sind geeignet: Kokse, Kohlen, Akivkohlen/-kokse, weitmaschig vernetzte Kunststoffe, Naturstoffe (Rinde, Holz) und/oder Schlacken.

Als besonders geeignet hat sich Aktivkohle mit ihrer großen Adsorptionskapazität erwiesen. Aufgrund des relativ hohen Preises von Aktivkohle können aus Kostengründen die anderen genannten Adsorptionsmittel verwendet werden, um den zur Sanierung des Bodens erforderlichen Dekontaminationsgrad zu erreichen. Dies ist insbesondere der Fall, wenn die hohe Adsorptionskapazität der Aktivkohle nicht benötigt wird, z. B. wenn als Kontamination solche Schadstoffe vorliegen, die am Bodenmaterial nur schwach adsorbiert sind, oder wenn das Verfahren auf die oberen Bodenschichten begrenzt in einer mindestens mehreren Wochen dauernden in-situ-Behandlung durchgeführt werden kann.

Die Erfindung wird nachfolgend anhand der Beispiele näher beschrieben.

### Vergleichsbeispiel 1:

Von einem Boden, der aus der obersten Bodenschicht eines Kokereistandortes stammt und 12 % Schluff enthält, wurde festes Grobmaterial > 10 mm durch Sieben entfernt. 1 kg des abgesiebten Bodens (Bodens 1) wurde mit 1 l einer 50 Gew.-%igen Kaliumjodidlösung (Dichte 1,6 g/cm³) versetzt und 30 Minuten geschüttelt. Anschließend wurde der Boden einer Dichtesortierung unterzogen und die oben aufschwimmende Schadstofffraktion und die sedimentierte Bodenfraktion (gereinigter Boden 1) erhalten. Zur Ermittlung des Bodendekontaminationsgrades` wurden die von der US-Environmental Protection Agency (EPA) in der "priority pollutant"-Liste genannten Polycyclische Aromatische Kohlenwasserstoffe (PAK) mittels Gaschromatographie oder Hochdruckflüssigkeitschromatographie der Toluol-Extrakte in den Bodenproben analysiert (M. A. Callahan et al. (1979) Water-related environmental fate of 129 priority pollutants, EPA-Report -440/4-79-0296). Die Untersuchungsergebnisse sind in der Tabelle 1 dargestellt.

**Tabelle 1**

| Untersuchungsergebnisse am Boden 1. | | | |
|---|---|---|---|
| Untersuchungen | Fraktionen | | |
| | Boden 1 | Boden 1 gereinigt | Schadstofffraktion |
| Leichtgut (Mikroskopie) | sehr viel | wenig | ausschließlich |
| Trockengewicht [g] | 1000 | 862 | 136 |
| Summe PAK nach EPA [mg/kg] | 1177 | 191 | 6978 |
| Benz[a]pyren [mg/kg] | 107 | 18 | 625 |
| Bodendekontaminationsgrad [%] | | 84 | |

Boden 1 enthält eine Leichtgutfraktion, deren Abtrennung zu einem Dekontaminationsgrad von 84 % führt. Boden 1 läßt sich somit mit einem Verfahren gemäß dem Stand der Technik reinigen.

### Vergleichsbeispiel 2:

Ein Boden, der aus der unteren Schicht eines Kokereistandortes stammt und 47 % Schluff enthält, wurde wie unter Vergleichsbeispiel 1. beschrieben aufgearbeitet. Die Untersuchungsergebnisse sind in der Tabelle 2 dargestellt. Der Boden 2 enthält keine Leichtgutfraktion. Aus der Tabelle ist ersichtlich, daß durch Dichtesortierung keine Bodendekontamination erreicht werden kann.

**Tabelle 2**

| Untersuchungsergebnisse am Boden 2. | | | |
|---|---|---|---|
| Untersuchungen | Fraktionen | | |
| | Boden 1 | Boden 1 gereinigt | Schadstofffraktion |
| Leichtgut (Mikroskopie) | nein | nein | nein |
| Trockengewicht [g] | 1000 | 994 | 2 |
| Summe PAK nach EPA [mg/kg] | 380 | 382 | n. b. |
| Benz[a]pyren [mg/kg] | 6 | 6 | n. b. |
| Bodendekontaminationsgrad [%] | | 0 | |

### Beispiel 3

Dem getrockneten kontaminierten Bodenmaterial (Boden 2) mit einer Korngröße <10 mm wurden 10 Gew.-% Aktivkohle (Schüttdichte 450 g/l, 2mm) zugesetzt.

Zur Adsorption der im Boden vorliegenden PAK wurde die Mischung mit 50 Gew.-% Wasser aufgeschlämmt und 7 Tage geschüttelt. Die Trennung des Bodens vom Adsorptionsmittel erfolgte wie unter Vergleichsbeispiel 1 beschrieben durch Dichtesortierung. Die Untersuchungsergebnisse sind in der Tabelle 3 dargestellt. Es wird ein Bodendekontaminationsgrad von 65 % erzielt. Der PAK-Wert des gereinigten Bodens 2 liegt unter dem Wert der Kategorie C der Holländischen Liste.

**Tabelle 3**

| Untersuchungsergebnisse am Boden 2. | | | |
|---|---|---|---|
| Untersuchungen | Fraktionen | | |
| | Boden 2 | Boden 2 gereinigt | Schadstofffraktion |
| Trockengewicht [g] | 1110 | 994 | 108 |
| Summe PAK nach EPA [mg/kg] | 379 | 131 | 2161 |
| Benz[a]pyren [mg/kg] | 5 | 2 | 29 |
| Bodendekontaminationsgrad [%] | | 65 | |

### Beispiel 4

Ein Boden, der aus der oberen Bodenschicht eines Kokereistandortes stammt (Boden 3) und der 36 % Schluff und 6,3 % Leichtgut enthält, wurde wie im Vergleichsbeispiel 1 beschrieben durch Dichtesortierung getrennt. Der Boden konnte wie aus Tabelle 4 ersichtlich zu 41 % dekontaminiert werden. Er weist einen PAK-Gehalt von 603 mg/kg auf, der deutlich über dem Grenzwert der Kategorie C der Holländischen Liste von 200 mg/kg liegt.

Der gleiche Boden wurde mit 10 Gew.-% Adsorptionsmittel (Aktivkohle, Schüttdichte 450 g/l, 2mm) versetzt und die Mischung mit 50 % Wasser aufgeschlämmt und 7 Tage geschüttelt. Anschließend wurde der Boden durch Dichtesortierung getrennt. Der Dekontaminationsgrad konnte wie aus Tabelle 4 ersichtlich auf 86 % gesteigert werden. Dieses Beispiel belegt, daß in dem Boden 3, der Leichtgut erhält, die Dekontamination mit dem erfindungsgemäßen Verfahren um etwa den Faktor 2 verbessert wird. Der PAK-Gehalt des gereinigten Bodens 3 liegt unter dem Wert der Kategorie C der Holländischen Liste.

**Tabelle 4**

| Untersuchungsergebnisse am Boden 3. | | | |
|---|---|---|---|
| Untersuchungen | Fraktionen | | |
| ohne Adsorptionsmittel | Boden 3 | Boden 3 gereinigt | Schadstofffraktion |
| Leichtgut (Mikroskopie) | viel | wenig | ausschließlich |
| Trockengewicht [g] | 1000 | 937 | 63 |
| Summe PAK nach EPA [mg/kg] | 1022 | 603 | 6650 |
| Benz[a]pyren [mg/kg] | 13 | 8 | 71 |
| Bodendekontaminationsgrad [%] | | 41 | |

| mit Adsorptionsmittel | | | |
|---|---|---|---|
| Trockengewicht [g] | 1110 | 934 | 176 |
| Summe PAK nach EPA [mg/kg] | 941 | 131 | 5106 |
| Benz[a]pyren [mg/kg] | 14 | 2 | 67 |
| Bodendekontaminationsgrad [%] | | 86 | |

### Beispiel 5

Zwei Böden, die aus der unteren Bodenschicht eines Kokereistandortes stammen und 29 % Schluff (Boden 4) bzw. 47 % Schluff (Boden 5) enthalten, wurden mit unterschiedlichen Adsorptionsmitteln (10 Gew.-%; 50 Gew.-% Wasser) versetzt. Nach 7 Tagen Behandlung wurden die Böden jeweils mit Hilfe der Dichtesortierung getrennt. Die Ergebnisse sind in Tabelle 5 dargestellt. Je nach Boden und verwendetem Adsorptionsmittel lagen die Dekontaminationsgrade zwischen 29 und 93 %.

**Tabelle 5**

| Einsatz unterschiedlicher Adsorptionsmittel zur Bodendekontamination | | | | | |
|---|---|---|---|---|---|
| Boden Nr. | Adsorptionsmittel | Korngröße [mm] | Boden PAK [mg/kg] | Boden gereinigt PAK [mg/kg] | Bodendekontaminationsgrad [%] |
| 4 | Aktivkohle | 2 | 2990 | 198 | 93 |
| 4 | Braunkohlenkoks | 2-4 | 3005 | 870 | 71 |
| 5 | Silikonkautschuk | 2-5 | 485 | 107 | 78 |
| 5 | Anthrazit | 1,6-2,5 | 482 | 342 | 29 |

### Beispiel 6

Ein Boden, der aus der oberen Bodenschicht eines Imprägnierwerkes stammt (Boden 6, sandiger Boden mit 3 % Schluff ohne Leichtgutfraktion), mit einem Wassergehalt von 5 % wurde mit unterschiedlichen Adsorptionsmitteln (10 Gew.-%) innig gemischt und ohne weitere Durchmischung über einen Zeitraum von 42 Tagen gelagert. Die Trennung der Adsorptionsmittel vom Bodenmaterial erfolgte anschließend durch Dichtesortierung. Die Ergebnisse sind in Tabelle 6 dargestellt. Durch diese Behandlung konnte mit allen verwendeten Adsorptionsmitteln ein Dekontaminationsgrad > 85 % erzielt werden.

**Tabelle 6**

| Einsatz unterschiedlicher Adsorptionsmittel zur Bodendekontamination. | | | | |
|---|---|---|---|---|
| Adsorptionmittel | Korngröße [mm] | Boden PAK [mg/kg] | Boden gereinigt PAK [mg/kg] | Bodendekontaminationsgrad [%] |
| Aktivkohle | 2-5 | 272 | <10 | >96 |
| Braunkohlenkoks | 2-4 | 279 | <10 | >96 |
| Silikon- | 2-5 | 291 | 24 | 92 |
| Anthrazit | 1,6-2,5 | 285 | 25 | 91 |
| Rindenmulch | <5 | 297 | 36 | 87 |

### Beispiel 7

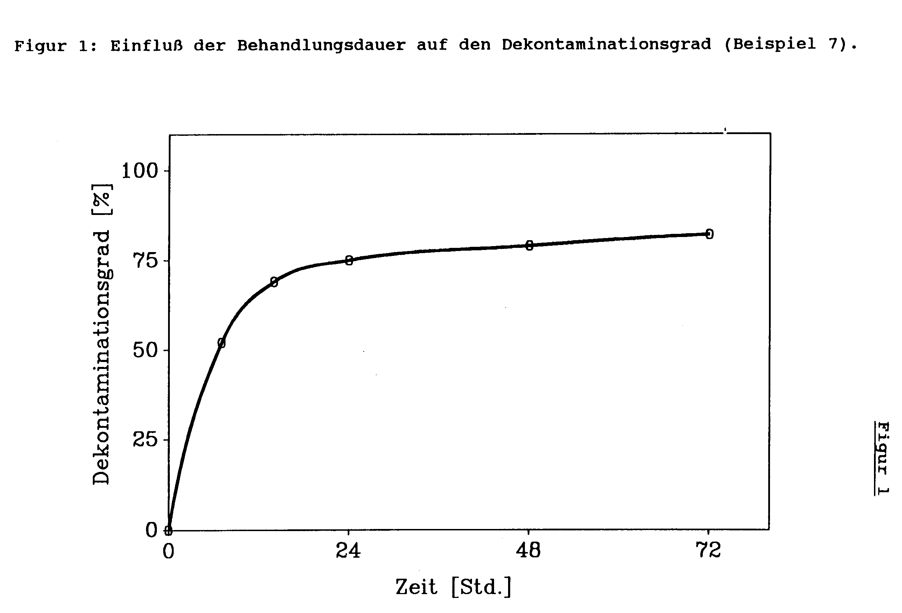

Trockenes kontaminiertes Bodenmaterial (Boden 4, ohne Leichtgutfraktion) wurde mit 10 Gew.-% Aktivkohle und 50 Gew.-% Wasser versetzt und unterschiedlich lange geschüttelt. Die Ergebnisse sind in Figur 1 dargestellt. Nach 7 Stunden waren 50 % der PAK an Aktivkohle adsorbiert. Nach 72 Stunden Behandlungsdauer konnte ein Dekontaminationsgrad von über 80 % erreicht werden. Wie aus Tabelle 5 (Beispiel 5) für Boden 4 bei Einsatz von Aktivkohle hervorgeht, wird nach 168 Stunden (7 Tage) Behandlungsdauer ein Dekontaminationsgrad von 93 % erzielt.

### Beispiel 8

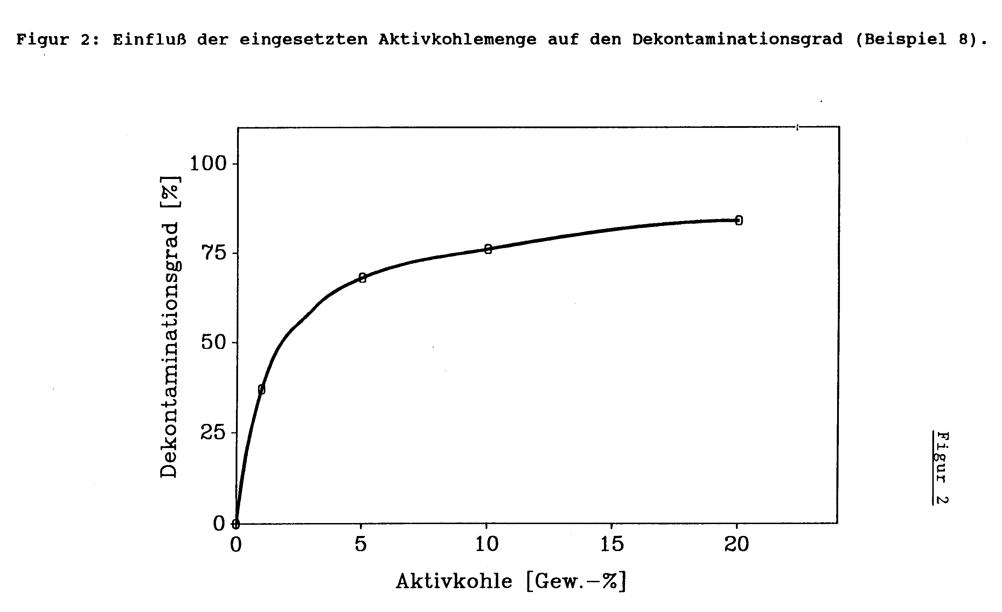

Trockenes kontaminiertes Bodenmaterial (Boden 4, ohne Leichtgutfraktion) wurde mit 50 Gew.-% Wasser und unterschiedlichen Mengen an Aktivkohle versetzt und 24 Stunden geschüttelt. Die Ergebnisse sind in Figur 2 dargestellt. Mit 1 Gew.-% Aktivkohle konnte nach 24 Stunden ein Dekontaminationsgrad von 50 % erreicht werden. Dieses Beispiel belegt, daß eine weitgehende Bodendekontaminierung mit dem Einsatz geringer Aktivkohlemengen erzielt werden kann.

Aus den Beispielen 7 und 8 ergibt sich, daß die bei der Dekontamination angestrebte Verringerung des PAK-Gehaltes des Bodens durch folgende Variationen des Verfahrens erreicht werden kann:
Durch Verlängerung der Behandlungsdauer kann wie aus Beispiel 7 ersichtlich der Dekontaminatinsgrad gesteigert werden.

Es ist auch möglich, durch Wiederholung der Behandlung mit frischem Adsorptionsmittel pro Zeiteinheit einen höheren Dekontaminationsgrad zu erreichen.

Aus Beispiel 8 kann abgeleitet werden, daß durch Erhöhung der Menge des Adsorptionsmittels der Dekontaminatinsgrad gesteigert werden kann.

In Abhängigkeit von der für die Sanierung zur Verfügung stehenden Zeit und der Kosten für das Adsorptionsmittel wird für das angestrebte Sanierungsziel die günstigste Verfahrensvariante festgelegt.

## Patentansprüche

1. Verfahren zur Bodenaufarbeitung, bei dem die in dem Boden enthaltene Kontamination durch Bodenwäsche, Klassierung, Dichtesortierung und/oder Flotation entfernt wird, wobei dem Boden in Abhängigkeit von dem ermittelten Gehalt an Schadstoffen ein Adsorptionsmittel zugegeben und mit dem Boden innig vermischt wird, **dadurch gekennzeichnet, daß** vorher der Gehalt an Leichtgut und Feinstkorn ermittelt wird und dem Boden in Abhängigkeit von dem ermittelten Gehalt an organischen Schadstoffen und Leichtgut ein grobkörniges Adsorptionsmittel zugegeben wird.

2. Verfahren nach Anspruch 1, **dadurch gekennzeichnet, daß** als Adsorptionsmittel Kokse, Kohlen, Aktivkohlen/-Kokse, weitmaschig vernetzte Kunststoffe, Naturstoffe (Rinde, Holz) und/oder Schlacken eingesetzt werden.

## Claims

1. Method of reconditioning soil, in which contaminants in the soil are removed by washing, screening, gravity separation and/or flotation, whereby an adsorption agent is added as a function of the determined content of contaminants and the adsorption agent is intimately mixed with the soil, **characterized in that** before reconditioning the content of the lightweight material and fine-particulate material is determined and coarse-grained adsorption agent is then added as a function of the organic contaminant and lightweight material contents.

2. Method according to claim 1, **characterized in that** coke, coal, activated carbon, activated coke, coarse-meshed cross-linked synthetic product, natural substances (bark, wood) and/or slag are used as an adsorption agent.

## Revendications

1. Procédé de retraitement de la terre conformément auquel on élimine les substances contaminantes contenues dans la terre par des lavages de la terre, tri par densité et/ou flottation, où on ajoute et mélange intimement un agent d'adsorption à la terre en fonction de la teneur déterminée en substances nuisibles, caractérisé en ce que l'on détermine au préalable les teneurs en légers et en fines et on ajoute un agent d'adsorption à gros grains à la terre en fonction des teneurs déterminées en substances nuisibles et en légers.

2. Procédé suivant la revendication 1, caractérisé en ce qu'à titre d'agent d'adsorption, on utilise du coke, du charbon, du coke/charbon activé, des matières plastiques réticulées à larges ou grandes mailles, des matières naturelles (écorce, bois) et/ou des scories.
